# EUROPEAN PATENT SPECIFICATION

(11) **EP 2 563 627 B1**
(45) Date of publication and mention of the grant of the patent: **06.06.2018**
(21) Application number: 10717621.6
(22) Date of filing: 28.04.2010
(51) Int. Cl.: B60S 1/38

(54) **WINDSCREEN WIPER DEVICE**
SCHEIBENWISCHERVORRICHTUNG
DISPOSITIF D'ESSUIE-GLACE

(43) Date of publication of application: 06.03.2013
(73) Proprietor: Federal-Mogul S.A., 6790 Aubange (BE)
(72) Inventor: BOLAND, Xavier, B-6700 Arlon (BE)
(74) Representative: Hooiveld, Arjen Jan Winfried
(86) International application number: PCT/EP2010/055674
(87) International publication number: WO 2011/134502

(56) References cited:
- EP-A1- 1 512 594
- EP-A2- 1 247 707
- DE-A1- 10 025 629
- DE-A1- 10 025 630
- DE-A1- 19 615 421
- US-A- 4 638 525

## Description

The present invention relates to a windscreen wiper device comprising an elastic, elongated carrier element, as well as an elongated wiper blade of a flexible material, which can be placed in abutment with a windscreen to be wiped, which wiper blade includes a central longitudinal groove, in which groove one longitudinal strip of the carrier element is disposed, which windscreen wiper device comprises a connecting device for an oscillating arm, wherein said oscillating arm is pivotally connected to said connecting device about a pivot axis near one end thereof.

Such a windscreen wiper device is generally known. This prior art windscreen wiper device is designed as a so-called "flat blade" or "yokeless blade", wherein no use is made of several yokes pivotally connected to each other, but wherein the wiper blade is biassed by the carrier element, as a result of which it exhibits a specific curvature. EP-A-1247707 shows the preamble of claim 1. The object of the invention is to provide an improved windscreen wiper device. In order to accomplish that objective, a windscreen wiper device of the type referred to in the introduction is further characterized among others in that said wiper blade is made by co-extrusion of at least two mutually differing elastomeric materials, wherein the first elastomeric material forms at least a part of an inner wall of said groove in order to lower the friction coefficient between contact surfaces of said longitudinal strip and said inner wall, and wherein the second elastomeric material forms the rest of said wiper blade. Accordingly, due to this low friction coefficient, a slight movement of the wiper blade relative to the longitudinal strip is made possible in order to allow said wiper blade to follow any curvature of the windscreen to be wiped. Further, due to this low friction coefficient, adherence ("sticking") of said wiper blade onto said longitudinal strip in case the windscreen wiper device in practice is exposed to high temperatures, is avoided. It goes without saying that such an adherence would seriously affect the wiping properties of the wiper blade.

It is noted that the present invention is restricted to the use of only one longitudinal strip forming the elastic carrier element that is particularly located in a central longitudinal groove or "cavity" of the wiper blade. According to the invention, the first elastomeric material forms a lining along the entire inner wall. In a preferred embodiment of a windscreen wiper device in accordance with the invention said friction coefficient is smaller than 1, preferably smaller than 0,7, more preferably smaller than 0,5. Said elastomeric material is a blend of different polymers, wherein a reinforcement material is added. Such a reinforcement material is a low friction material, such as graphite, polypropylene (PP) powder, polyethylene (PE) powder or polytetrafluorethylene (PTFE) powder.

The invention also relates to a process for manufacturing a windscreen wiper device as recited in claim 3. In a preferred embodiment of a process in accordance with the invention said first elastomeric material is provided inside the material of the inner wall of said groove through a channel of an extruder die forming said groove. Said elastomeric material will chemically be bonded/linked with the second elastomeric material of the wiper blade after curing.

The invention will now be explained more in detail with reference to figures illustrated in a drawing, wherein
- figure 1 is a perspective, schematic view of a preferred embodiment of a windscreen wiper device according to the invention;
- figure 2 is a cross-sectional view of a rubber element of a wiper blade, as used in a windscreen wiper device of figure 1, during manufacturing thereof; and
- figure 3 is a cross-sectional view of a wiper blade according to a preferred embodiment.

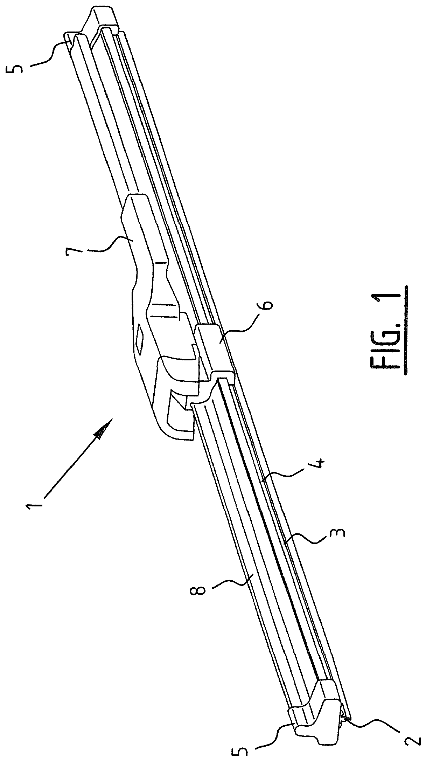

Figure 1 shows a preferred variant of a windscreen wiper device 1 according to the invention. Said windscreen wiper device is built up of an elastomeric wiper blade 2 comprising a central longitudinal groove 3, wherein a longitudinal strip or "flexor" 4 made of spring band steel is fitted in said longitudinal groove 3. Said strip 4 forms a flexible carrier element for the rubber wiper blade 2, as it were, which is thus biassed in a curved position (the curvature in operative position being that of a windscreen to be wiped). An end of said strip 4 is connected on either side of the windscreen wiper device 1 to respective connecting pieces or "end caps" 5 functioning as closing parts. In this embodiment, the connecting pieces 5 are separate constructional elements, which may be form-locked as well as force-locked to both ends of said strip 4. In another preferred variant, said connecting pieces 5 are in one piece with the strip 4 made of spring band steel. The windscreen wiper device 1 is furthermore built up of a connecting device 6 for connecting an oscillating wiper arm 7 thereto. The oscillating wiper arm 7 is pivotally connected to the connecting device 6 about a pivot axis near one end. The preferred embodiment of figure 1 according to the invention comprises a spoiler or "air deflector" 8 which is made in one piece with the rubber wiper blade 2.

Although not shown in figure 1, but fully understood by a skilled person, said oscillating arm 7 is connected to a mounting head fixed for rotation to a shaft driven by a small motor. In use, the shaft rotates alternately in a clockwise and in a counter-clockwise sense carrying the mounting head into rotation also, which in turn draws said oscillating arm 7 into rotation and by means of said connecting device 6 moves said wiper blade 2.

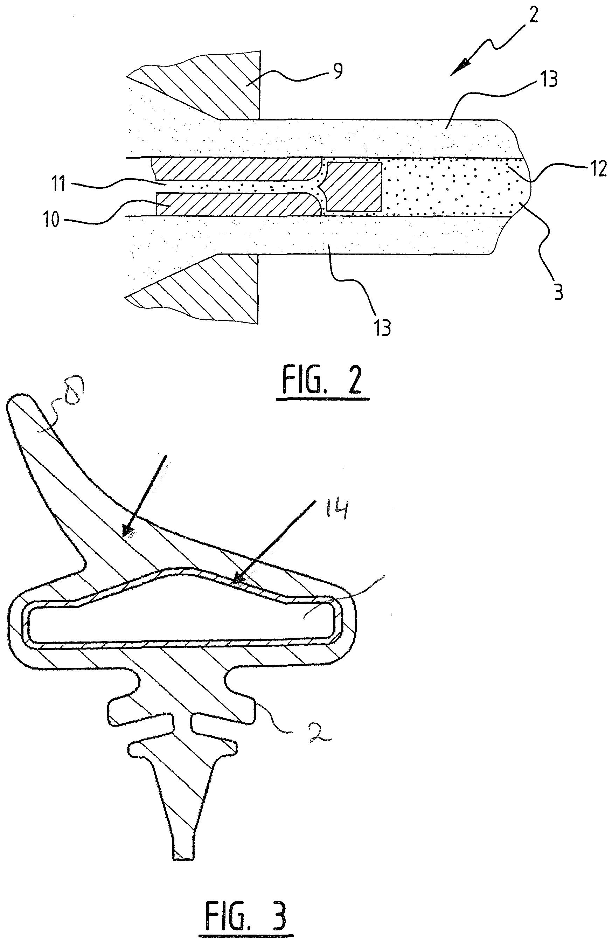

Figure 2 shows a cross-sectional view of the wiper blade 2 of figure 1 during manufacturing thereof, wherein a die or mould is used having an outer part 9 and an inner part or core 10. Said core 10 is meant for forming the central groove or cavity 3 for the longitudinal strip 4. Said core 10 comprises a channel 11, so that a first elastomeric material 12 can be transported thereto to bond with a second elastomeric material during and after curing. Said first elastomeric material forms a lining along the entire inner wall 13 of said cavity 3, wherein said second elastomeric material forms the rest of said wiper blade. Said first elastomeric material comprises particles allowing a lowering of the friction coefficient between contact surfaces of said longitudinal strip 4 and said inner wall 13. Thus, a slight movement of the wiper blade 2 relative to the longitudinal strip 4 is made possible in order to allow said wiper blade 2 to follow any curvature of the windscreen to be wiped.

Adherence ("sticking") of said wiper blade 2 onto said longitudinal strip 4 in case the windscreen wiper device 1 in practice is exposed to high temperatures, is avoided.

Figure 3 shows a wiper blade 2, made along what is shown in figure 2, seen in cross section. The first elastomeric material comprising a polymer forms a lining or covering 14 along the entire inner wall 13 defining said groove 3, after the co-extrusion process. This first elastomeric material is loaded with a low friction material so as to enable a free longitudinal movement of the longitudinal strip 4 inside the groove 3 relative to said lining 14. As indicated above, the lining 14 covers the inner wall 13 in its entirety. The second elastomeric material is a standard rubber for a wiper blade 2. Co-extrusion between the first and second materials, being both polymer materials of the same family, is efficient and elegant leading to a strong bond between these materials.

The invention is not restricted to the variants shown in the drawing, but it also extends to other preferred embodiments that fall within the scope of the appended claims.

## Claims

1. A windscreen wiper device (1) comprising an elastic, elongated carrier element, as well as an elongated wiper blade (2) of a flexible material, which can be placed in abutment with a windscreen to be wiped, which wiper blade (2) includes a central longitudinal groove (3), in which groove (3) one longitudinal strip (4) of the carrier element is disposed, which windscreen wiper device (1) comprises a connecting device (6) for an oscillating arm (7), wherein said oscillating arm (7) is pivotally connected to said connecting device (6) about a pivot axis near one end thereof, **characterized in that** said wiper blade (2) is made by co-extrusion of at least two mutually differing elastomeric materials bonded during and after curing, wherein the first elastomeric material forms a lining along the entire inner wall (13) of said groove (3) in order to lower the friction coefficient between contact surfaces of said longitudinal strip (4) and said inner wall (13), and wherein the second elastomeric material forms the rest of said wiper blade (2), wherein said first elastomeric material comprises a blend of different polymers comprising a reinforcement material being a low friction material.

2. A windscreen wiper device (1) according to claim 1, wherein said friction coefficient is smaller than 1, preferably smaller than 0,7, more preferably smaller than 0,5.

3. A process for manufacturing a windscreen wiper device(1) comprising an elastic, elongated carrier element, as well as an elongated wiper blade (2) of a flexible material, which can be placed in abutment with a windscreen to be wiped, which wiper blade (2) includes a central longitudinal groove (3), in which groove (3) one longitudinal strip (4) of the carrier element is disposed, which windscreen wiper device (1) comprises a connecting device (6) for an oscillating arm (7), wherein said oscillating arm (7) is pivotally connected to said connecting device (6) about a pivot axis near one end thereof, **characterized in that** said wiper blade (2) is made by co-extrusion of at least two mutually differing elastomeric materials bonded during and after curing, wherein the first elastomeric material forms a lining along the entire inner wall (13) of said groove (3) in order to lower the friction coefficient between contact surfaces of said longitudinal strip (4) and said inner wall (13), and wherein the second elastomeric material forms the rest of said wiper blade (2), wherein said first elastomeric material comprises a blend of different polymers comprising a reinforcement material being a low friction material.

4. A process according to claim 3, wherein said first elastomeric material is provided through a channel (11) of a mould (10) forming said groove (3).

## Patentansprüche

1. Scheibenwischervorrichtung (1) mit einem elastischen, länglichen Trägerelement sowie einem länglichen Wischerblatt (2) aus einem flexiblen Material, das an eine zu wischende Windschutzscheibe angelegt werden kann, wobei das Wischerblatt (2) eine mittige Längsnut (3) aufweist, in der ein längs verlaufender Streifen (4) des Trägerelements angeordnet ist, wobei die Scheibenwischervorrichtung (1) eine Verbindungsvorrichtung (6) für einen Hebelarm (7) umfasst, wobei der Hebelarm (7) um eine Schwenkachse in der Nähe eines Endes davon schwenkbar mit der Verbindungsvorrichtung (6) verbunden ist, **dadurch gekennzeichnet, dass** das Wischerblatt (2) durch Koextrusion von mindestens zwei verschiedenen elastomeren Materialien hergestellt ist, die bei und nach dem Aushärten fest miteinander verbunden werden, wobei das erste elastomere Material an der gesamten Innenwand (13) der Nut (3) entlang eine Beschichtung bildet, so dass sich der Reibungskoeffizient zwischen Kontaktflächen des längs verlaufenden Streifens (4) und der Innenwand (13) verringert, und das zweite elastomere Material den Rest des Wischerblatts (2) bildet, wobei das erste elastomere Material ein Gemisch aus verschiedenen Polymeren mit einem Verstärkungsmaterial umfasst, bei dem es sich um ein reibungsarmes Material handelt.

2. Scheibenwischervorrichtung (1) nach Anspruch 1, wobei der Reibungskoeffizient kleiner als 1, vorzugsweise kleiner als 0,7, besonders bevorzugt kleiner als 0,5 ist.

3. Verfahren zum Herstellen einer Scheibenwischervorrichtung (1) mit einem elastischen, länglichen Trägerelement sowie einem länglichen Wischerblatt (2) aus einem flexiblen Material, das an eine zu wischende Windschutzscheibe angelegt werden kann, wobei das Wischerblatt (2) eine mittige Längsnut (3) aufweist, in der ein längs verlaufender Streifen (4) des Trägerelements angeordnet ist, wobei die Scheibenwischervorrichtung (1) eine Verbindungsvorrichtung (6) für einen Hebelarm (7) umfasst, wobei der Hebelarm (7) um eine Schwenkachse in der Nähe eines Endes davon schwenkbar mit der Verbindungsvorrichtung (6) verbunden ist, **dadurch gekennzeichnet, dass** das Wischerblatt (2) durch Koextrusion von mindestens zwei verschiedenen elastomeren Materialien hergestellt ist, die bei und nach dem Aushärten fest miteinander verbunden werden, wobei das erste elastomere Material an der gesamten Innenwand (13) der Nut (3) entlang eine Beschichtung bildet, so dass sich der Reibungskoeffizient zwischen Kontaktflächen des längs verlaufenden Streifens (4) und der Innenwand (13) verringert, und das zweite elastomere Material den Rest des Wischerblatts (2) bildet, wobei das erste elastomere Material ein Gemisch aus verschiedenen Polymeren mit einem Verstärkungsmaterial umfasst, bei dem es sich um ein reibungsarmes Material handelt.

4. Verfahren nach Anspruch 3, wobei das erste elastomere Material über einen Kanal (11) eines Formwerkzeugs (10) bereitgestellt wird, das die Nut (3) ausbildet.

## Revendications

1. Dispositif de balai d'essuie-glace (1) comprenant un élément porteur allongé élastique, ainsi qu'une lame de balai allongée (2) réalisée dans un matériau souple, qui peut être placé en butée avec un pare-brise à essuyer, laquelle lame de balai (2) comprend une rainure longitudinale centrale (3), rainure (3) dans laquelle est disposée une bande longitudinale (4) de l'élément porteur, lequel dispositif de balai d'essuie-glace (1) comprend un dispositif de connexion (6) d'un bras oscillant (7), dans lequel ledit bras oscillant (7) est connecté de manière pivotante audit dispositif de connexion (6) autour d'un axe de pivot à proximité d'une extrémité de celui-ci, **caractérisé en ce que** ladite lame de balai (2) est réalisée par coextrusion de deux matériaux élastomères au moins mutuellement différents, collés pendant et après la cuisson, dans lequel le premier matériau élastomère forme un revêtement le long de toute la paroi intérieure (13) de ladite rainure (3) de façon à abaisser le coefficient de frottement entre les surfaces de contact de ladite bande longitudinale (4) et de ladite paroi intérieure (13), et dans lequel le second matériau élastomère forme le reste de ladite lame de balai (2), dans lequel ledit premier matériau élastomère comprend un mélange de différents polymères comprenant un matériau de renfort qui est un matériau à faible frottement.

2. Dispositif de balai d'essuie-glace (1) selon la revendication 1, dans lequel ledit coefficient de frottement est inférieur à 1, de préférence inférieur à 0,7, mieux inférieur à 0,5.

3. Procédé destiné à fabriquer un dispositif de balai d'essuie-glace (1) comprenant un élément porteur allongé élastique, ainsi qu'une lame de balai allongée (2) réalisée dans un matériau souple, qui peut être placé en butée avec un pare-brise à essuyer, laquelle lame de balai (2) comprend une rainure longitudinale centrale (3), rainure (3) dans laquelle est disposée une bande longitudinale (4) de l'élément porteur, lequel dispositif de balai d'essuie-glace (1) comprend un dispositif de connexion (6) d'un bras oscillant (7), dans lequel ledit bras oscillant (7) est connecté de manière pivotante audit dispositif de connexion (6) autour d'un axe de pivot à proximité d'une extrémité de celui-ci, **caractérisé en ce que** ladite lame de balai (2) est réalisée par coextrusion de deux matériaux élastomères au moins mutuellement différents, collés pendant et après la cuisson, dans lequel le premier matériau élastomère forme un revêtement le long de toute la paroi intérieure (13) de ladite rainure (3) de façon à abaisser le coefficient de frottement entre les surfaces de contact de ladite bande longitudinale (4) et de ladite paroi intérieure (13), et dans lequel le second matériau élastomère forme le reste de ladite lame de balai (2), dans lequel ledit premier matériau élastomère comprend un mélange de différents polymères comprenant un matériau de renfort qui est un matériau à faible frottement.

4. Procédé selon la revendication 3, dans lequel ledit premier matériau élastomère est fourni à travers un canal (11) d'un moule (10) qui forme ladite rainure (3).
